# EUROPÄISCHE PATENTSCHRIFT

(11) **EP 3 102 368 B1**
(45) Veröffentlichungstag und Bekanntmachung des Hinweises auf die Patenterteilung: **27.01.2021**
(21) Anmeldenummer: 15714157.3
(22) Anmeldetag: 05.02.2015
(51) Int. Cl.: B25J 11/00, B25J 17/02, B25J 15/00, B25J 19/06

(54) **WERKZEUG FÜR EINEN ROBOTER ZUR AUSBRINGUNG EINES VISKOSEN MEDIUMS, ROBOTER ZUR AUSBRINGUNG EINES VISKOSEN MEDIUMS, UND VERFAHREN ZUR AUSBRINGUNG EINES VISKOSEN MEDIUMS MITTELS EINES SOLCHEN ROBOTERS**
TOOL FOR A ROBOT FOR APPLYING A VISCOUS MEDIUM, ROBOT FOR APPLYING A VISCOUS MEDIUM, AND METHOD FOR APPLYING A VISCOUS MEDIUM BY MEANS OF SUCH A ROBOT
OUTIL POUR UN ROBOT SERVANT À APPLIQUER UN FLUIDE VISQUEUX, ROBOT POUR APPLIQUER UN FLUIDE VISQUEUX, ET PROCÉDÉ POUR APPLIQUER UN FLUIDE VISQUEUX AU MOYEN D'UN TEL ROBOT

(30) Priorität: 05.02.2014 DE 102014001638
(43) Veröffentlichungstag der Anmeldung: 14.12.2016
(73) Patentinhaber: Faude Automatisierungstechnik GmbH, 71116 Gärtringen (DE)
(72) Erfinder: FAUDE, Dieter, 71116 Gärtringen (DE)
(74) Vertreter: Tillmann, Axel
(86) Internationale Anmeldenummer: PCT/DE2015/000054
(87) Internationale Veröffentlichungsnummer: WO 2015/117594

(56) Entgegenhaltungen:
- DE-U1- 20 122 250
- JP-A- S5 992 056
- US-A- 4 468 695
- US-A- 4 998 606

## Beschreibung

### Stand der Technik

Die Erfindung geht aus von einem Werkzeug für einen Roboter zur Ausbringung eines viskosen Mediums, welches beispielsweise als Befettsystem für das Befetten von unterschiedlichsten Bauteilen in den unterschiedlichsten Bereichen eingesetzt werden kann, nach der Gattung des Anspruchs 1, einem mit einem solchen Werkzeug ausgestatteten Roboter zur Ausbringung eines viskosen Mediums, und einem Verfahren zur Ausbringung eines viskosen Mediums mittels eines solchen Roboters.

Werkzeuge für einen Roboter gehören seit langer Zeit zum Stand der Technik. Bei dem Einsatz eines Roboters können Produktionsschritte automatisiert werden. Trotz dieser Automatisierung, die in der Regel eine Bewegung des Roboters und/oder eine Bewegung des zu bearbeitenden Teils beinhaltet, muss aber sichergestellt werden, dass die automatisierten Arbeitsschritte zuverlässig durchgeführt und den qualitativen Ansprüchen bzgl. des Arbeitsergebnisses entsprechen. Zudem sind die Anforderungen an die Arbeitssicherheit recht hoch, so dass das Gefährdungspotential, das von einem automatisierten Prozess ausgeht, möglichst gering gehalten werden soll. All dies kann sich nachteilig auf den Umfang der Automatisierung auswirken.

Die Druckschriften JP 59092056 A und US 4468695 A offenbaren ein Werkzeug zur Ausbringung eines viskosen Mediums gemäß des Oberbegriffs des Anspruchs 1. Aufgabe der Erfindung ist es daher, den Umfang der Automatisierung unter Berücksichtigung des notwendigen Sicherheitsaspektes möglichst weit zu gestalten.

### Die Erfindung und ihre Vorteile

Das erfindungsgemäße Werkzeug für einen Roboter zur Ausbringung eines viskosen Mediums, welches beispielsweise als Befettsystem für das Befetten von unterschiedlichsten Bauteilen in den unterschiedlichsten Bereichen eingesetzt werden kann, gemäß Anspruch 1, der erfindungsgemäße Roboter zur Ausbringung eines viskosen Mediums gemäß Anspruch 12, und das erfindungsgemäße Verfahren zur Ausbringung eines viskosen Mediums mittels eines Roboters, gemäß Anspruch 13, haben demgegenüber den Vorteil, dass bei einer Kollision des Werkzeuges mit einem Gegenstand oder einem Menschen mindestens der bewegliche Teil des Werkzeuges eine Ausweichbewegung vollführt, so dass durch eine Reduzierung des Gefährdungspotential ein hoher Grad an Automatisierung ermöglicht wird.

Das Leitungsende kann eine Düse, eine Dosiernadel oder eine Schmierspitze sein. Das Leitungsende kann verschließbar sein. Hierdurch wird sichergestellt, dass das Medium zwischen den Arbeitsschritten nicht unkontrolliert austreten kann.

Die Lagerung kann rückstellfähig und/oder flexibel sein. Dadurch werden Schäden vermieden. Durch die Rückstellfähigkeit in eine vor einer Kollision gegebene Position, die beispielsweise durch Federkraft und/oder Elastizität bewerkstelligt werden kann, kann ein durch eine Kollision gestörtes Verfahren zügig wieder aufgenommen werden, da das verlagerte Werkzeug oder der verlagerte Teil des Werkzeuges wieder in die vor einer Kollision gegebene Position gebracht wird. Eine durch Anlegen einer Kraft verformtes und/oder verlagertes Werkzeug und/oder Werkzeugteil, kehrt somit bei Abwesenheit der Kraft wieder in die ursprüngliche Form und/oder Lage zurück. Bzgl. der Verformbarkeit des Werkzeuges oder eines Teils des Werkzeuges (z.B. zumindest ein Teil der Zuleitung) handelt es sich bevorzugt um eine elastische Verformbarkeit. Um die Verformbarkeit und/oder Rückstellfähigkeit zu bewerkstelligen, können dementsprechende Werkstoffe, insbesondere ein Elastomer eingesetzt werden, so dass z.B. zumindest ein Teil der Zuleitung aus einem Elastomer besteht, so dass es dadurch rückstellfähig ausgebildet ist. In diesem Zusammenhang steht auch die Dehnbarkeit der Zuleitung bzw. der Lagerung, wenn dies die Zuleitung ist, wenn z.B. das Fett gepresst wird.

Die Lagerung kann eine sphärische Lagerung sein. Eine sphärische Lagerung hat den Vorteil, dass Drehebenen neben dem Verlauf in einer Ebene auch schräg stehen können.

Mindestens eine Lagerung ist durch eine Stabilisierungsvorrichtung, die bevorzugt verschiebbar ist, blockierbar. Dies hat den Vorteil, dass die Zuleitung starr ist und nicht ausweichen kann.

Die Stabilisierungsvorrichtung kann zumindest teilweise um zumindest einen Teil der Zuleitung angeordnet sein und/oder die Stabilisierungsvorrichtung kann zumindest teilweise in zumindest einen Teil der Zuleitung integriert sein und/oder die Stabilisierungsvorrichtung kann zumindest einen Teil der Zuleitung sein.

Die Stabilisierungsvorrichtung kann insbesondere zumindest bereichsweise um einen flexibel bzw. dehnbar ausgebildeten Teil der Zuleitung angeordnet sein, um zumindest bereichsweise eine Dehnung bzw. Verformung der Zuleitung zu hemmen bzw. zu verhindern, insbesondere für den Fall, dass die Zuleitung mit einem Druck beaufschlagt wird.

Die Stabilisierungsvorrichtung kann eine Hülse sein oder die Stabilisierungsvorrichtung kann durch die Zuleitung gebildet werden, die zumindest teilweise aus einem intelligenten Werkstoff besteht. Mit einem intelligenten Werkstoff ist ein Werkstoff gemeint, der beispielsweise bei einem Anlegen einer Spannung starr wird.

Die Hülse kann verschieblich um die Zuleitung angeordnet sein.

Das Werkzeug kann eine Heizvorrichtung aufweisen. Durch die Heizvorrichtung kann das Medium erwärmt werden, so dass dadurch ein Einfluss auf die Fließfähigkeit ausgeübt werden kann.

Das Werkzeug kann eine Sensorik aufweisen. Bevorzugt ist die Sensorik eine Kamera oder ein Kamerasystem. Der Vorteil einer Kamera oder eines Kamerasystems besteht darin, dass Abweichungen bei der Leitungsendeposition erkannt werden, so dass eine Nachjustierung möglich wird.

Der Roboters zur Ausbringung eines viskosen Mediums, der ein Werkzeug, das mittels einer Befestigungsvorrichtung an dem Roboter angeordnet ist, eine Zuleitung für das viskose Medium und ein am Werkzeug angeordnetes Leitungsende, das am Ende der Zuleitung angeordnet ist, aufweist, wobei dass das Werkzeug mindestens eine Lagerung aufweist, kann eine Sensorik aufweisen.

Der Roboter kann eine Sensorik zur Positionsbestimmung des Leitungsendes aufweisen.

Der Roboter kann ein kollaborierender Roboter sein. Dadurch wird ein kollaborierender Betrieb des erfindungsgemäßen Roboters mit dem Menschen ermöglicht. Für einen solchen kollaborierenden Betrieb zwischen Mensch und Maschine sind in Deutschland die Normen EN-ISO 10218-1, EN-ISO 10218-2 sowie die technische Spezifikationen der Berufsgenossenschaft TS 15066 beachtlich, wobei diese erfindungsgemäß eingehalten werden.

Eine erfindungsgemäße technische Lösung macht einen kollaborierenden Betrieb ohne Schutzzaun möglich. Ziel der Erfindung ist es ein Werkzeug zum Ausbringen von z.B. hochviskosen (bspw. dickflüssiges Fett) oder niedrigviskosen (bspw. dünnflüssiges Öl) Medien, zur Verfügung zu stellen, bei dem das von dem Werkzeug ausgehende Gefahrenpotenzial, das insbesondere bei Bewegung des Werkzeuges gegeben ist, dadurch reduziert wird, dass das Werkzeug mindestens eine Lagerung, insbesondere eine sphärische Lagerung, aufweist mittels dieser das Werkzeug an dem Roboter angeordnet ist, wodurch während der Zeit, in der das Gefahrenpotenzial vorhanden ist (z.B. während das Werkzeug von einer zu bearbeitenden Stelle zu einer anderen zu bearbeitenden Stelle verbracht wird), das Werkzeug und/oder zumindest ein Teil des Werkzeuges beweglich ist. Aufgrund dieser Beweglichkeit weichen das Werkzeug und/oder ein Teil des Werkzeuges einem Körper, insbesondere einem menschlichen Körperteil, aus. Hierdurch wird eine Beschädigung des Werkzeuges und/oder eines Teils des Werkzeuges und/oder des Körpers vermieden. Spätestens wenn das Gefahrenpotenzial und/oder die Gefahr einer Beschädigung nicht gegeben oder zumindest als unerheblich angesehen wird, insbesondere, wenn sich das Werkzeug in der Arbeitsposition befindet, wird die Lagerung, insbesondere die sphärische Lagerung, zumindest teilweise versteift, wodurch der für das Werkzeug vorgesehene Prozess durchgeführt werden kann.

Das Werkzeug ist ein Werkzeug nach einem der Ansprüche 1 bis 11.

Bei dem erfindungsgemäßen Verfahren zur Ausbringung eines viskosen Mediums mittels eines mit einem solchen Werkzeug ausgestatteten Roboters, wobei das Werkzeug eine Befestigungsvorrichtung (z.B. Anschlusseinheit) zur Anbringung des Werkzeuges an dem Roboter und eine Zuleitung für das viskose Medium mit einem Leitungsende aufweist und das Werkzeug mindestens eine Lagerung aufweist, durch die mindestens ein Teil des Werkzeuges bewegbar ist, wobei spätestens zu Beginn der zur Ausbringung des viskosen Mediums die Lagerung mittels einer Stabilisierungsvorrichtung blockiert wird, kann die Stabilisierungsvorrichtung ein Abknicken der Zuleitung und/oder eine Ausdehnung der Zuleitung bei der Ausbringung des viskosen Mediums verhindern.

Nach der Ausbringung des viskosen Mediums kann die Lagerung durch die Stabilisierungsvorrichtung freigegeben werden.

Bei einem nicht zur Erfindung gehörenden Verfahren zur Reduzierung eines von einem Werkzeug eines Roboters ausgehenden Gefahrenpotenzials, bei dem das Werkzeug mindestens eine Lagerung aufweist, durch die mindestens ein Teil des Werkzeuges bewegbar ist, so dass bei einer Kollision des Werkzeuges mit einem Gegenstand oder einem Menschen mindestens der bewegliche Teil des Werkzeuges eine Ausweichbewegung vollführt, kann die Lagerung mittels einer Stabilisierungsvorrichtung blockiert werden, so dass die Lagerung spätestens zu Beginn eines Arbeitsprozesses (z.B. einer Ausbringung eines viskosen Mediums) mittels der Stabilisierungsvorrichtung blockiert ist.

Spätestens nach einem Arbeitsprozess (z.B. der Ausbringung des viskosen Mediums) kann die Lagerung durch die Stabilisierungsvorrichtung freigegeben werden.

Weitere Vorteile und vorteilhafte Ausgestaltungen der Erfindung sind der nachfolgenden Beschreibung, der Zeichnung und den Ansprüchen entnehmbar.

### Zeichnung

Bevorzugte Ausführungsbeispiele des erfindungsgemäßen Gegenstands sind in der Zeichnung dargestellt und werden im Folgenden näher erläutert. Es zeigen
- Fig. 1: einen Querschnitt durch ein erfindungsgemäßes Werkzeug für Roboter zum Befetten im Nicht-Befett-Modus mit einer flexiblen Zuleitung für das Schmiermittel zum Schutz vor Verletzungen,
- Fig. 2: einen Querschnitt durch ein erfindungsgemäßes Werkzeug für Roboter zum Befetten im Befett-Modus mit einem nach vorne geschobenen starren Außenmantel über einer flexiblen Zuleitung für das Schmiermittel,
- Fig. 3: einen Querschnitt durch ein weiteres Ausführungsbeispiel eines erfindungsgemäßen Werkzeuges für Roboter zum Befetten im Nicht-Befett-Modus mit nach hinten gezogenen starren Außenmantel und einer flexiblen Zuleitung für das Schmiermittel zum Schutz vor Verletzungen sowie der Anschlusseinheit für den Roboter,
- Fig. 4: einen Querschnitt durch ein erfindungsgemäßes Werkzeug für Roboter zum Befetten im Befett-Modus, gemäß Fig. 3, in mit einem nach vorne geschobenen starren Außenmantel über einer flexiblen Zuleitung für das Schmiermittel,
- Fig. 5: eine Seitenansicht des erfindungsgemäßen Werkzeuges, gemäß Fig. 3,
- Fig. 6: eine im Querschnitt gezeigte Detailansicht einer Düse des erfindungsgemäßen Werkzeuges, gemäß Ausschnitt A aus Fig. 3,
- Fig. 7: einen Querschnitt durch das erfindungsgemäße Werkzeug an einem Roboterarm und ein zu befettendes Bauteil im Befett-Modus,
- Fig. 8: eine im Querschnitt gezeigte Detailansicht (mit beispielhafter Bemaßung) einer Düse des erfindungsgemäßen Werkzeuges für Roboter im Befett-Modus an einem zu befettenden Bauteil, gemäß Ausschnitt A aus Fig. 7,
- Fig. 9: eine dreidimensionale Ansicht des erfindungsgemäßen Werkzeuges an einem Roboterarm im Befett-Modus und einen Querschnitt eines zu befettenden Bauteils,
- Fig. 10: eine dreidimensionale Ansicht des erfindungsgemäßen Werkzeuges an einem Roboterarm im Befett-Modus,
- Fig. 11: eine weitere dreidimensionale Ansicht des erfindungsgemäßen Werkzeuges an einem Roboterarm im Befett-Modus,
- Fig. 12: eine weitere dreidimensionale Ansicht des erfindungsgemäßen Werkzeuges an einem Roboterarm im Befett-Modus,
- Fig. 13: eine weitere dreidimensionale Ansicht des erfindungsgemäßen Werkzeuges an einem Roboterarm im Befett-Modus,
- Fig. 14: eine weitere dreidimensionale Ansicht des erfindungsgemäßen Werkzeuges an einem Roboterarm im Befett-Modus,
- Fig. 15: eine weitere dreidimensionale Ansicht im Querschnitt durch eine Düse des erfindungsgemäßen Werkzeuges für Roboter im Befett-Modus an einer zu befettenden Schmierbohrung des Bauteils,
- Fig. 16: eine weitere dreidimensionale perspektivische Ansicht im Querschnitt durch eine Düse des erfindungsgemäßen Werkzeuges für Roboter im Befett-Modus an einer zu befettenden Schmierbohrung des Bauteils,
- Fig. 17: eine weitere dreidimensionale Ansicht im Querschnitt durch eine Düse des erfindungsgemäßen Werkzeuges für Roboter im Nicht-Befett-Modus bei der Annäherung an eine zu befettende Schmierbohrung des Bauteils,
- Fig. 18: eine weitere dreidimensionale Ansicht einer Düse des erfindungsgemäßen Werkzeuges für Roboter im Nicht-Befett-Modus bei der Annäherung an eine zu befettende Schmierbohrung des Bauteils,
- Fig. 19: eine weitere dreidimensionale Ansicht einer Düse des erfindungsgemäßen Werkzeuges für Roboter im Nicht-Befett-Modus bei der Annäherung an eine zu befettende Schmierbohrung des Bauteils,
- Fig. 20: eine weitere dreidimensionale Ansicht des erfindungsgemäßen Werkzeuges an einem Roboterarm im Nicht-Befett-Modus mit abgewinkelter Düse,
- Fig. 21: eine weitere dreidimensionale Ansicht des erfindungsgemäßen Werkzeuges an einem Roboterarm im Nicht-Befett-Modus mit abgewinkelter Düse bei Annäherung an eine zu befettende Schmierbohrung des Bauteils,
- Fig. 22: eine weitere dreidimensionale Seitenansicht des erfindungsgemäßen Werkzeuges im Nicht-Befett-Modus mit abgeknickter Düse, welche sich in bzw. hinter einer Abschirmung befindet,
- Fig. 23: eine weitere dreidimensionale Seitenansicht des erfindungsgemäßen Werkzeuges im Nicht-Befett-Modus mit abgeknickter Düse, welche sich in bzw. hinter einer Abschirmung befindet,
- Fig. 24: eine weitere dreidimensionale Ansicht im Querschnitt durch die Düse des erfindungsgemäßen Werkzeuges im Nicht-Befett-Modus mit abgeknickter Düse, welche sich in bzw. hinter einer Abschirmung oberhalb des Bauteils mit den zu befettenden Schmierbohrungen befindet,
- Fig. 25: eine weitere dreidimensionale Seitenansicht einer Düse des erfindungsgemäßen Werkzeuges im Nicht-Befett-Modus mit abgewinkelter Düse, die sich in bzw. hinter einer Abschirmung oberhalb des Bauteils mit den zu befettenden Schmierbohrungen befindet, um ein Gefahrenpotenzial zu reduzieren,
- Fig. 26: eine dreidimensionale Ansicht des erfindungsgemäßen Werkzeuges an einem Roboterarm zum Beölen einer Schmierbohrung des Bauteils ohne starren Außenmantel an der flexiblen Zuleitung im Querschnitt, wobei sich das erfindungsgemäße Werkzeug in Beölposition befindet,
- Fig. 27: eine weitere dreidimensionale Ansicht des erfindungsgemäßen Werkzeuges an einem Roboterarm zum Beölen einer Schmierbohrung des Bauteils ohne starren Außenmantel an der flexiblen Zuleitung im Querschnitt, wobei sich das erfindungsgemäße Werkzeug in Beölposition befindet,
- Fig. 28: eine weitere dreidimensionale Ansicht des erfindungsgemäßen Werkzeuges an einem Roboterarm zum Beölen einer Schmierbohrung des Bauteils ohne starren Außenmantel an der flexiblen Zuleitung, wobei sich das erfindungsgemäße Werkzeug in Beölposition befindet,
- Fig. 29: eine weitere dreidimensionale Ansicht des erfindungsgemäßen Werkzeuges an einem Roboterarm zum Beölen einer Schmierbohrung des Bauteils ohne starren Außenmantel an der flexiblen Zuleitung im Querschnitt, wobei sich das erfindungsgemäße Werkzeug in Beölposition befindet,
- Fig. 30: eine weitere dreidimensionale Ansicht des erfindungsgemäßen Werkzeuges an einem Roboterarm zum Beölen einer Schmierbohrung des Bauteils ohne starren Außenmantel an der flexiblen Zuleitung im Querschnitt, wobei sich das erfindungsgemäße Werkzeug in Beölposition befindet,
- Fig. 31: eine weitere dreidimensionale Ansicht des erfindungsgemäßen Werkzeuges an einem Roboterarm zum Beölen einer Schmierbohrung des Bauteils ohne starren Außenmantel an der flexiblen Zuleitung im Querschnitt, wobei sich das erfindungsgemäße Werkzeug in Beölposition befindet,
- Fig. 32: eine Aufsicht auf eine Schnittzeichnung des erfindungsgemäßen Werkzeuges,
- Fig. 33: eine Detailansicht des erfindungsgemäßen Werkzeuges, gemäß Fig. 32,
- Fig. 34: eine Seitenansicht auf eine Schnittzeichnung des erfindungsgemäßen Werkzeuges,
- Fig. 35: eine Seitenansicht auf eine Schnittzeichnung des erfindungsgemäßen Werkzeuges und
- Fig. 36: eine Detailansicht des erfindungsgemäßen Werkzeuges, gemäß Fig. 35.

### Beschreibung des Ausführungsbeispiels

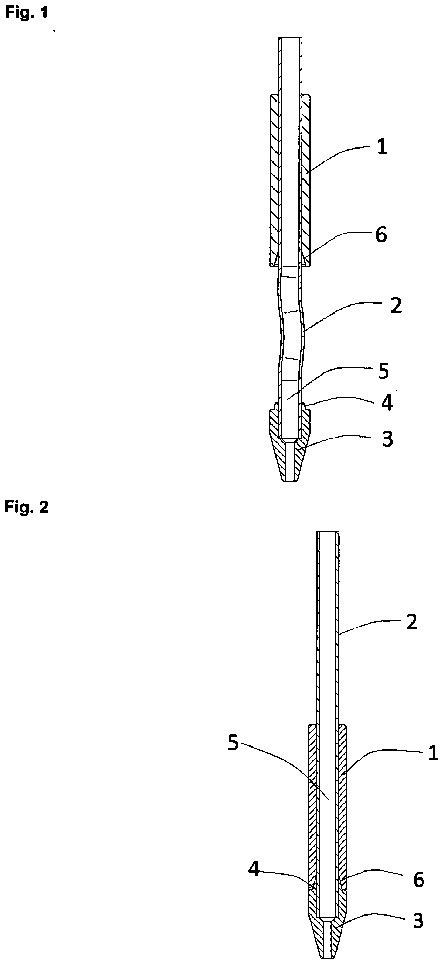

Fig. 1 zeigt einen Querschnitt durch ein erfindungsgemäßes Werkzeug für Roboter zum Befetten im Nicht-Befett-Modus. Das erfindungsgemäße Werkzeug weist eine Hülse 1 auf, die beweglich an einer flexiblen Zuleitung, die als Lagerung, insbesondere sphärisches Lagerung, dient, angeordnet ist. Am Zuleitungsende befindet sich eine Düse 3, die an ihrer dem Zuleitungsende abgewandten Seite einen Zentrierkonus 4 aufweist und zur Ausbringung für ein viskoses Medium 5 (z.B. Schmiermittel) dient. Die Hülse 1 weist an Ihrem der Düse 3 zugewandten Ende eine Aussparung 6 auf, in die der Zentrierkonus 4 der Düse 3 zur Verbindung von Düse 3 und Hülse 1 einführbar ist.

Fig. 2 zeigt einen Querschnitt durch ein erfindungsgemäßes Werkzeug für Roboter zum Befetten im Befett-Modus. Um in den Befett-Modus zu gelangen, wird die Hülse 1 in Richtung Düse 3 verschoben, bis der Zentrierkonus 4 in die an der Hülse 1 angeordnete korrespondierende Ausnehmung 6 eingreift, wodurch eine Stabilisierung der flexiblen Zuleitung 2 erfolgt.

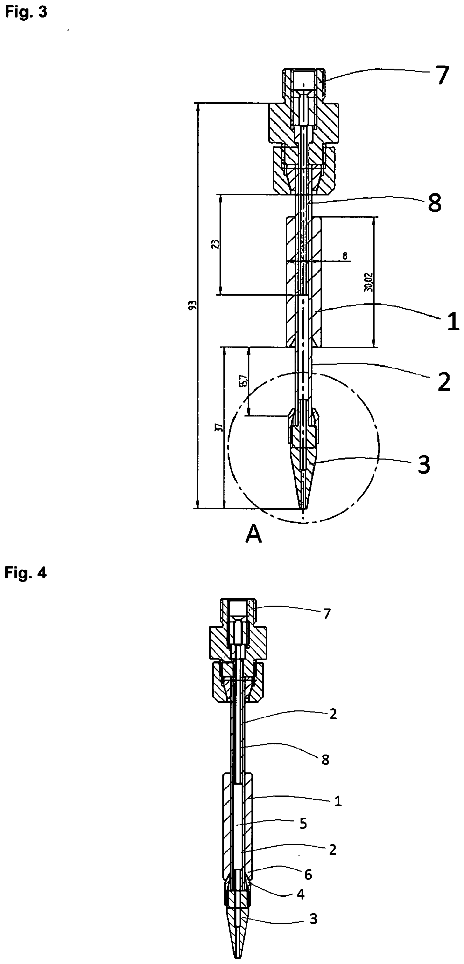

Fig. 3 zeigt einen Querschnitt durch ein weiteres Ausführungsbeispiel eines erfindungsgemäßen Werkzeuges für Roboter zum Befetten im Nicht-Befett-Modus mit nach hinten gezogenen starren Außenmantel (Hülse 1) und einer flexiblen Zuleitung 2 für das Schmiermittel zum Schutz vor Verletzungen sowie eine Anschlusseinheit 7 für den Roboter. Die angegebene Bemaßung ist nur beispielhaft. Innerhalb der flexiblen Zuleitung 2 ist zumindest teilweise ein starres Rohr 8 angeordnet, durch dass die flexible Zuleitung 2 stabilisiert ist, insbesondere, wenn die Hülse 1 in Richtung Düse 3 verschoben wird. Durch das Rohr 8 wird eine Ausweitung der flexiblen Zuleitung 2, die durch einen erforderlichen Druck, der beispielsweise bei der Ausbringung eines hochviskosen (dickflüssigen) Mediums (z.B. Fett) notwendig ist, vermieden. Dadurch ist eine exakte Ausbringmenge des auszubringenden Mediums 5 gewährleistet.

Fig. 4 zeigt einen Querschnitt durch ein erfindungsgemäßes Werkzeug für Roboter zum Befetten im Befett-Modus, gemäß Fig. 3, in mit einem nach vorne geschobenen starren Außenmantel über einer flexiblen Zuleitung 2 für das Schmiermittel. In dieser Position ist das Werkzeug aufgrund der Hülse 1 und dem Rohr 8 vollständig starr und die Lagerung blockiert.

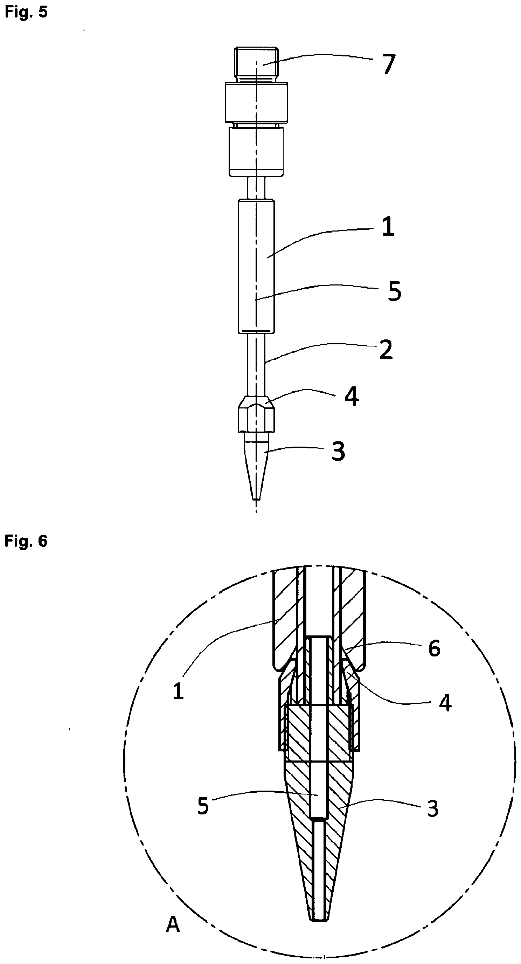

Fig. 5 zeigt eine Seitenansicht des erfindungsgemäßen Werkzeuges, gemäß Fig. 3.

Fig. 6 zeigt eine im Querschnitt gezeigte Detailansicht einer Düse 3 des erfindungsgemäßen Werkzeuges, gemäß Auschnitt A aus Fig. 3.

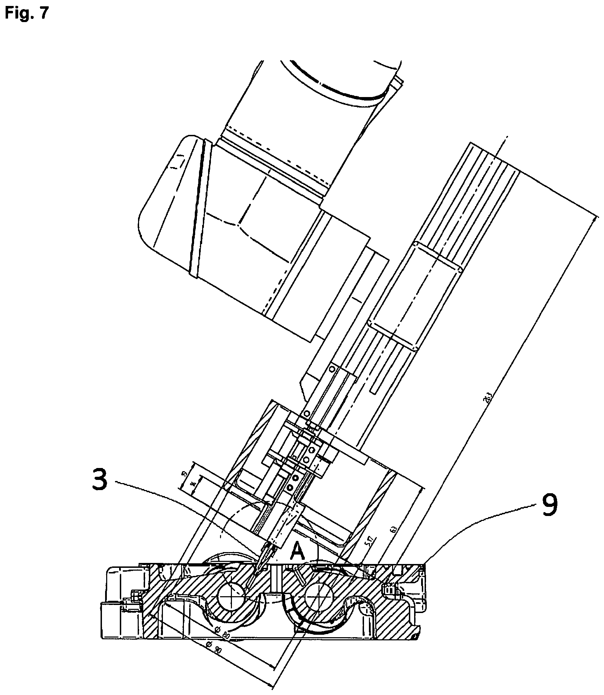

Fig. 7 zeigt einen Querschnitt durch das erfindungsgemäße Werkzeug an einem Roboterarm und ein zu befettendes Bauteil 9 im Befett-Modus. Die angegebene Bemaßung ist nur beispielhaft. Das Bauteil 9, beispielsweise eine Kurbelwelle eines Antriebs eines Kraftfahrzeuges, die mit einem Medium 5 (Schmiermedium) geschmiert werden soll, wird vorzugsweise von einem externen oder internen Antrieb in Bewegung versetzt (gedreht) während das Medium 5 (kalt oder erwärmt), beispielsweise Fett, Öl oder ein sonstiges Schmiermittel, mittels des erfindungsgemäßen Werkzeug für einen Roboter über ein Dosierventil, eine flexible Zuleitung 2 (Schlauch) und eine Düse 3, zum Beispiel eine Dosiernadel, in die Schmierbohrung des Bauteil 9 eingetragen wird. Durch dieses Verfahren findet ein Eintrag (Einschleppen) des Mediums 5 auf der Oberfläche des zu befettenden Bauteils bei reduziertem Druck statt. Für den Fall, dass ein Medium 5 mit niedriger/geringer Viskosität, also ein dünnflüssiges Medium, wie beispielsweise Öl, zum Befetten eingesetzt wird, kann das Verfahren zum Befetten eines Bauteils 9 auch ohne eine Drehung durchgeführt werden.

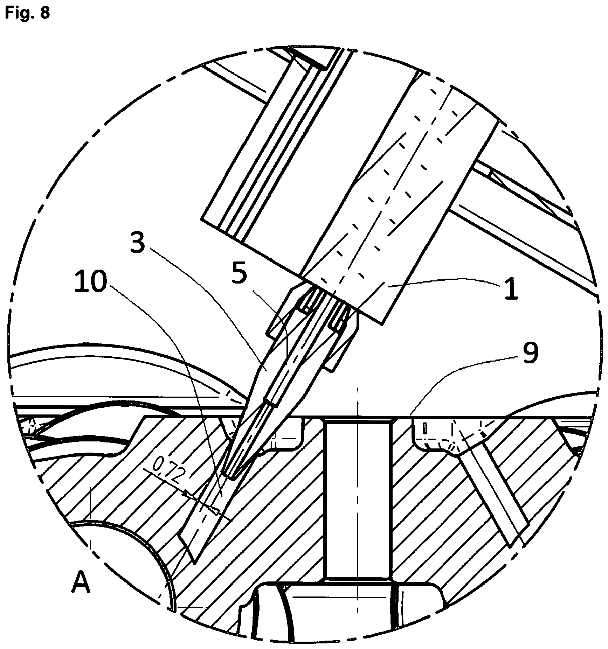

Fig. 8 zeigt eine im Querschnitt gezeigte Detailansicht einer Düse 3 des erfindungsgemäßen Werkzeuges für Roboter im Befett-Modus an einem zu befettenden Bauteil 9, gemäß Ausschnitt A aus Fig. 7. Hierbei ist die Hülse 1 durch Verschiebung an der flexiblen Zuleitung 2 mit der Düse 3 verbunden. Somit kann das Medium 5 mittels Druck (Pressdruck) in die Bohrung 10 ausgebracht werden, da die Hülse 1 und eventuell ein Rohr 8 ein ungewolltes Aufweiten der flexiblen Zuleitung 2 verhindert.

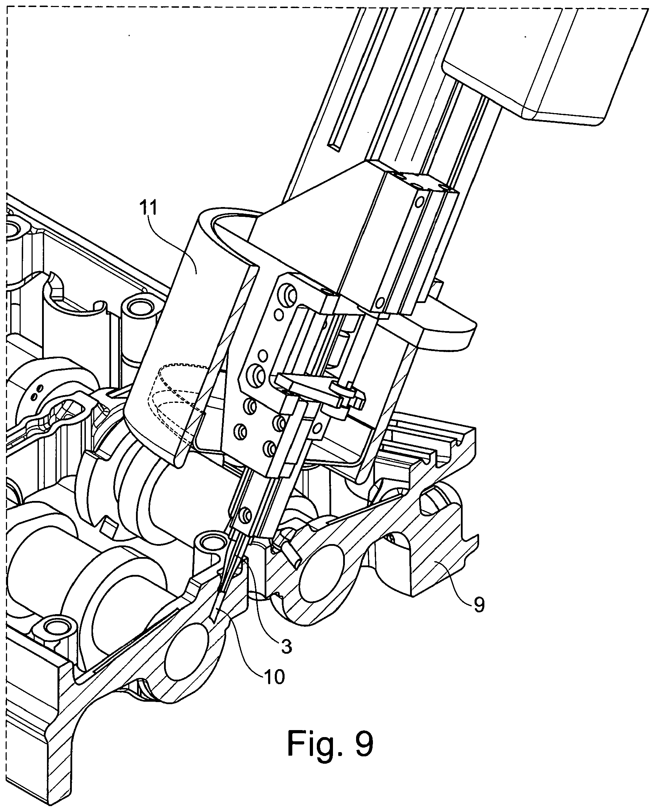

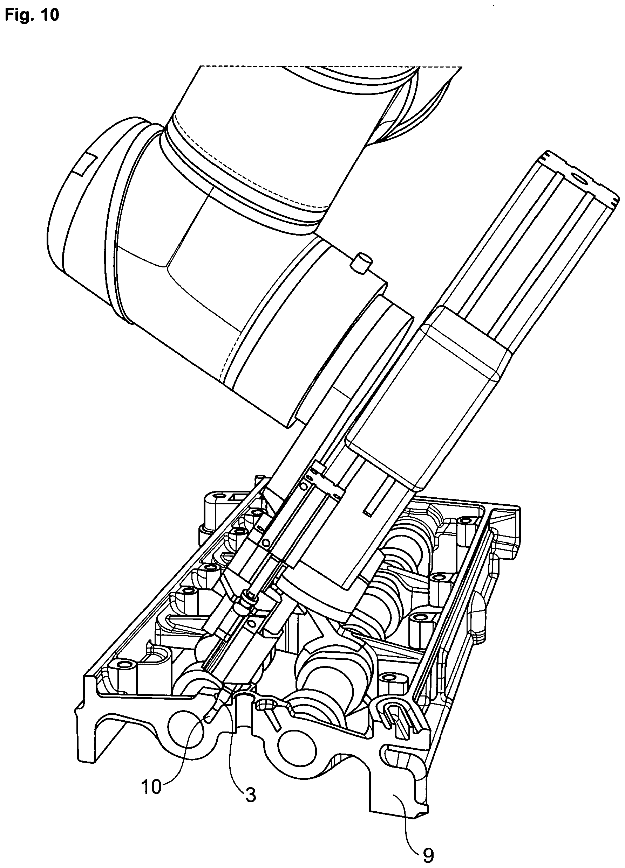

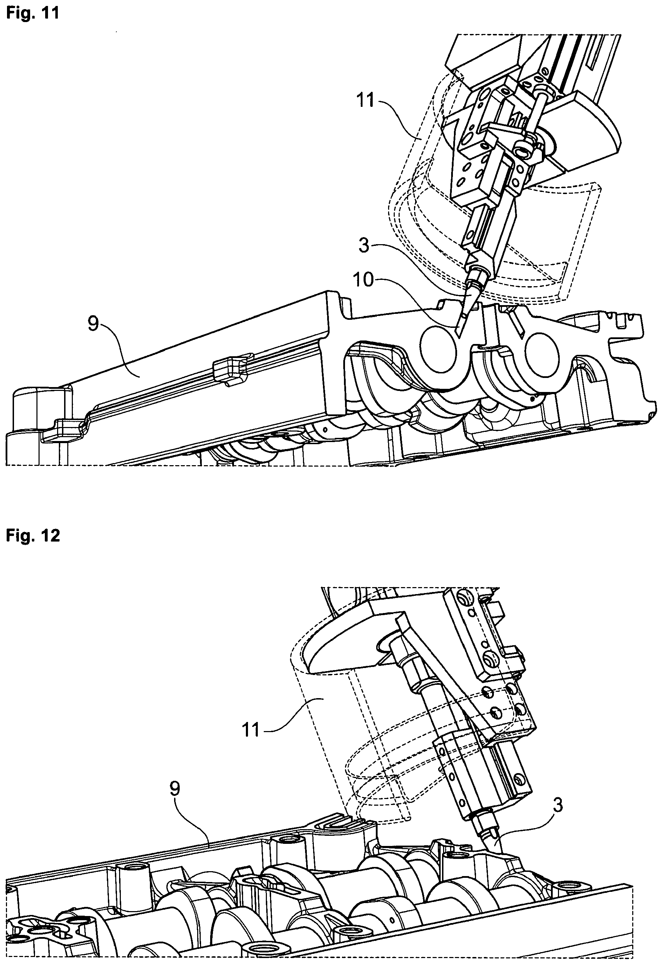

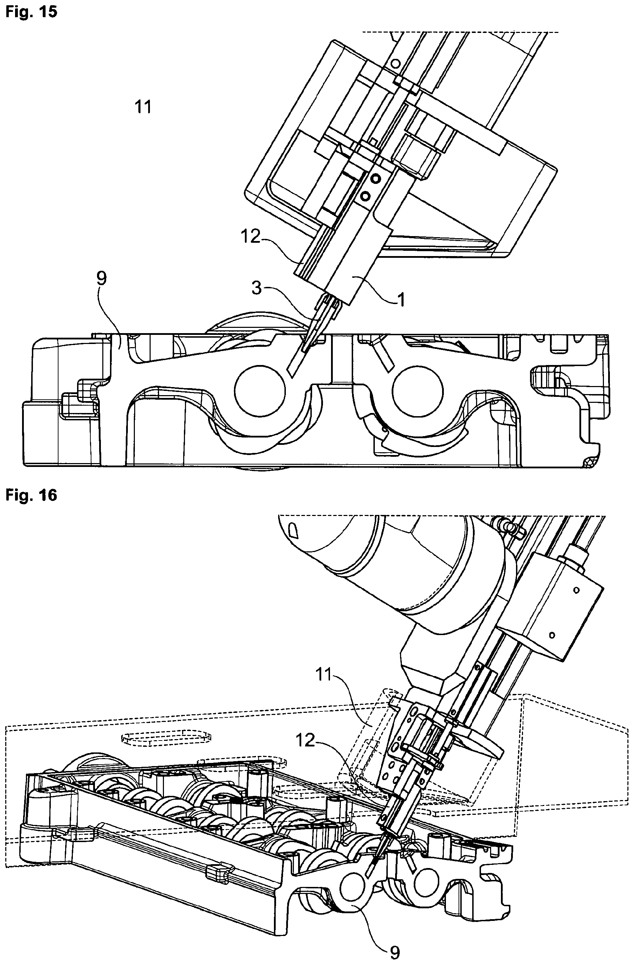

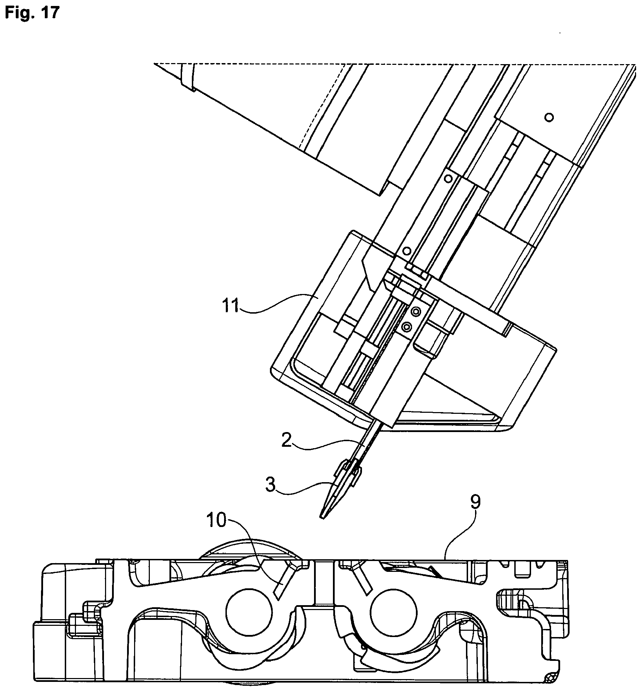

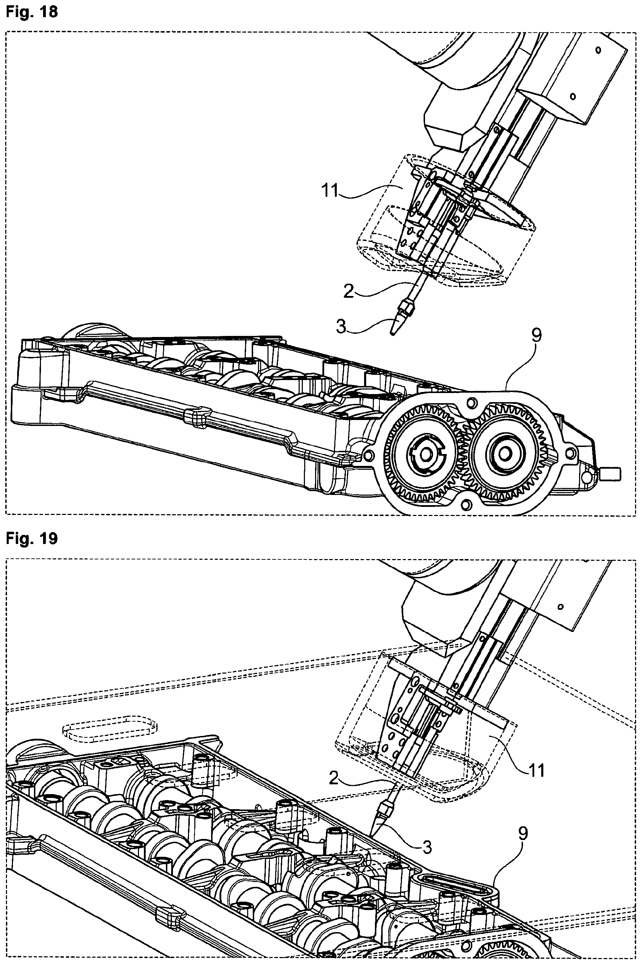

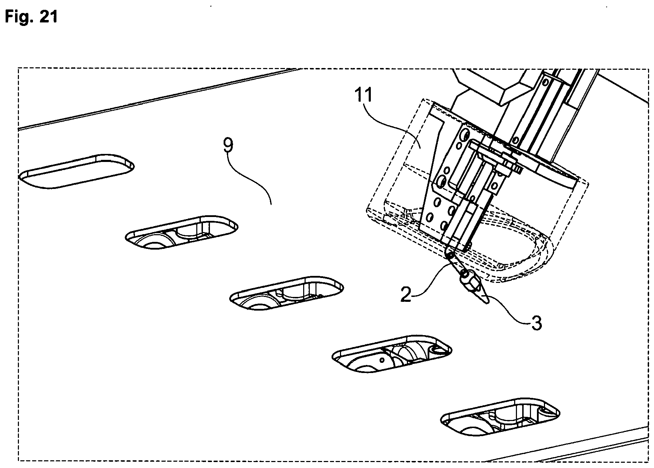

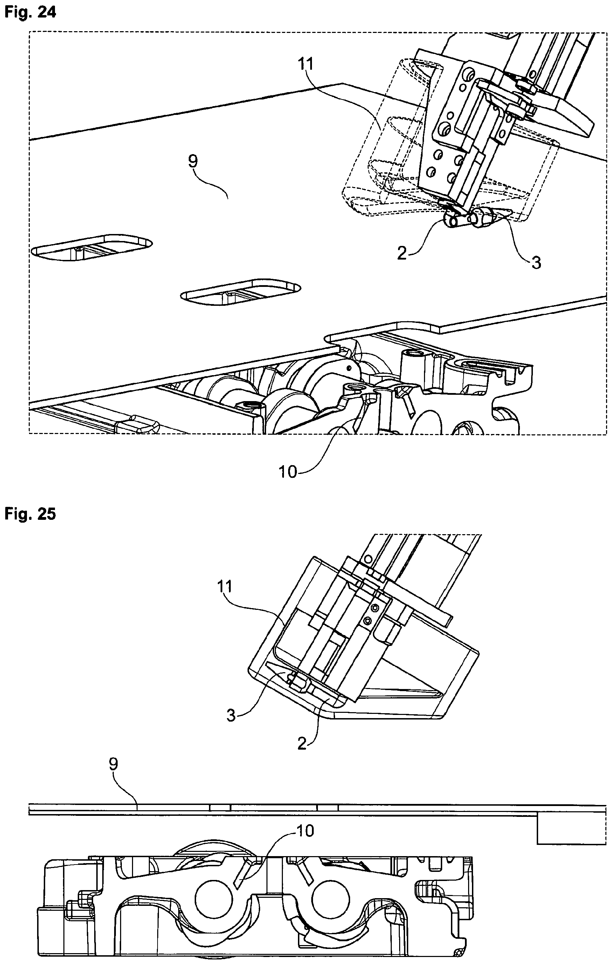

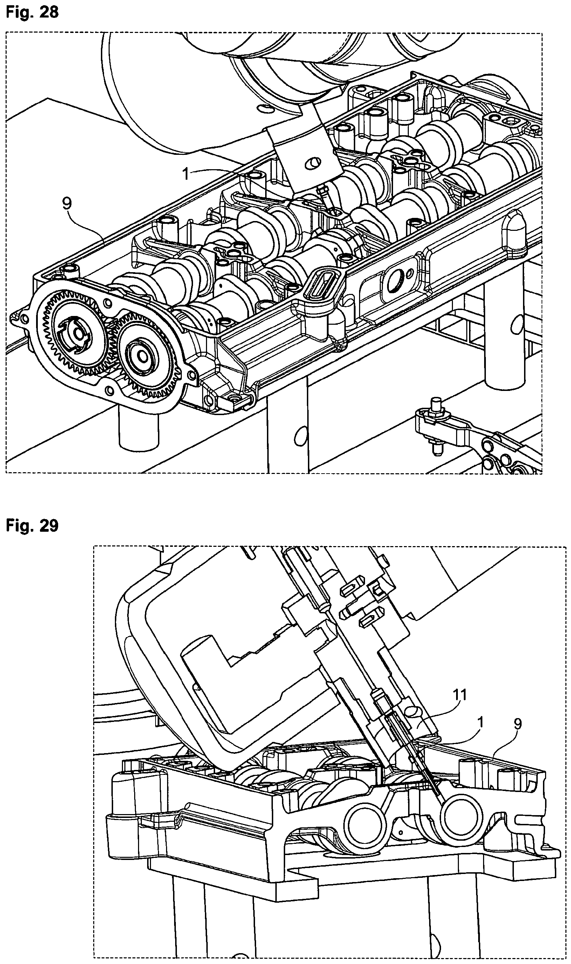

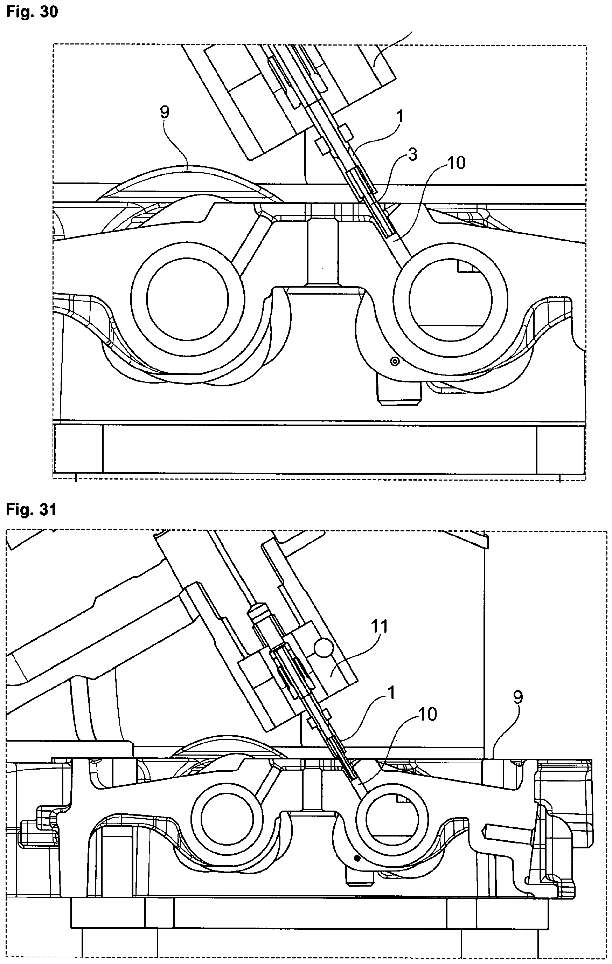

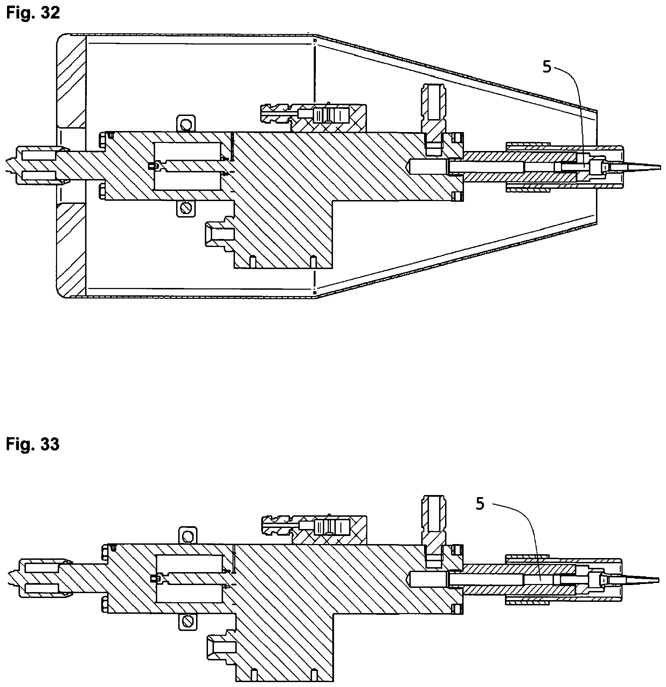

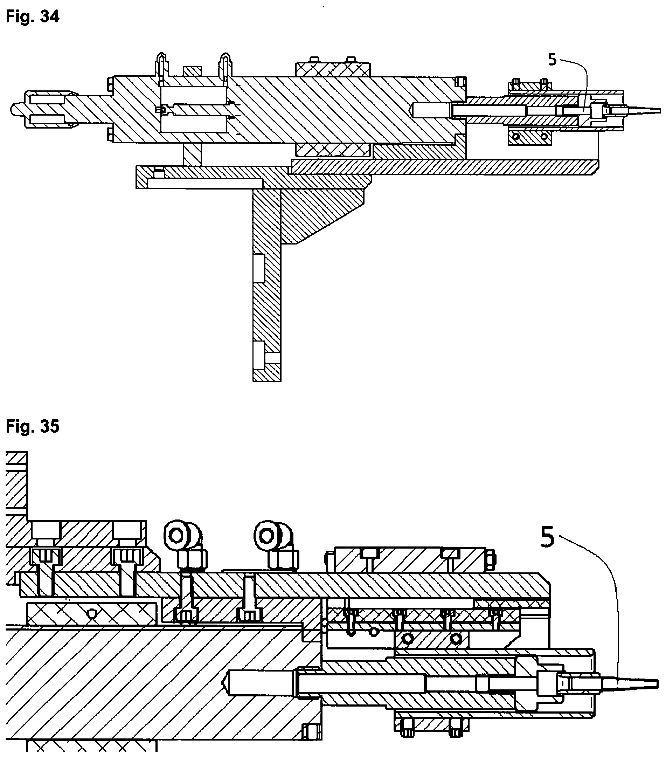

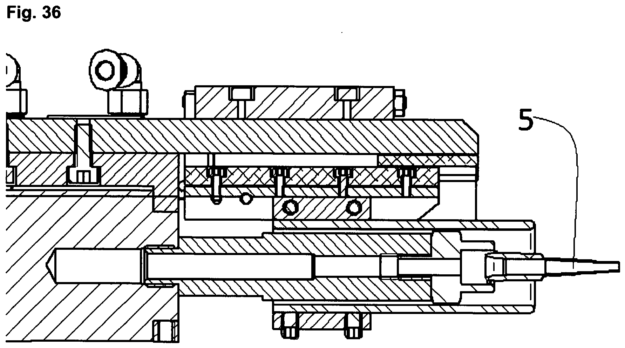

Aus den Fig. 9 bis Fig. 36 sind weitere Einzelheiten der Vorrichtung eines erfindungsgemäßen Werkzeuges sowie des Verfahrens zum Befetten eines Bauteils 9 mittels dieses erfindungsgemäßen Werkzeuges entnehmbar und erkennbar.

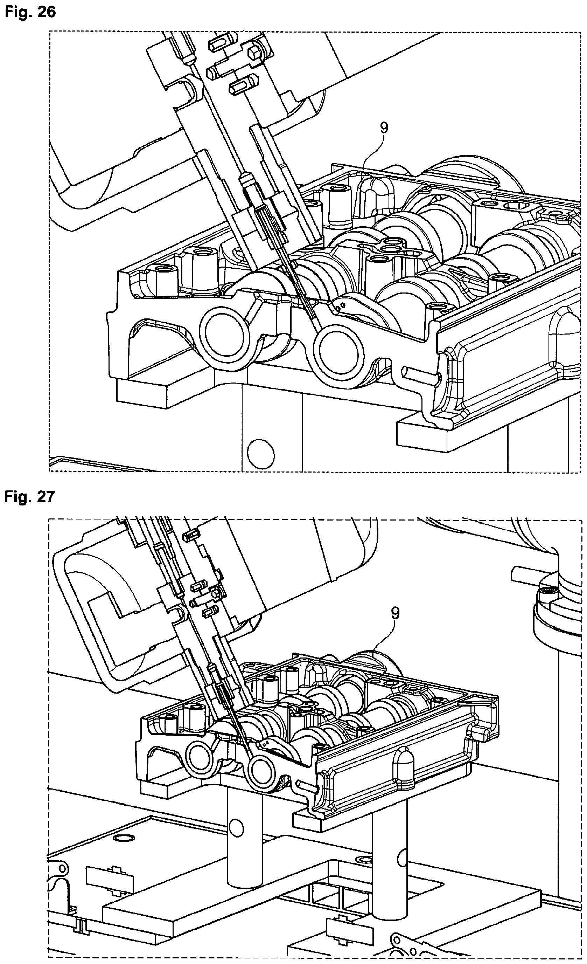

Während insbesondere die Fign. 3 bis 25 ein Ausführungsbeispiel des erfindungsgemäßen Werkzeuges zur Einbringung eines hochviskosen (zähflüssigen) Mediums 5 in eine Bohrung 10 oder dgl. mit einem an erfindungsgemäßen Werkzeug angeordneten starren Außenmantel, beispielsweise einer Hülse 1, in unterschiedlichsten Ansichten zeigen, stellen die Fign. 26 bis 36 ein weiteres Ausführungsbeispiel des erfindungsgemäßen Werkzeuges zur Einbringung eines niedrigviskosen (dünnflüssigen) Mediums 5 in eine Bohrung 10 oder dgl. dar, wobei an dem erfindungsgemäßen Werkzeug kein starrer Außenmantel, beispielsweise einer Hülse 1, angeordnet ist, in unterschiedlichsten Ansichten.

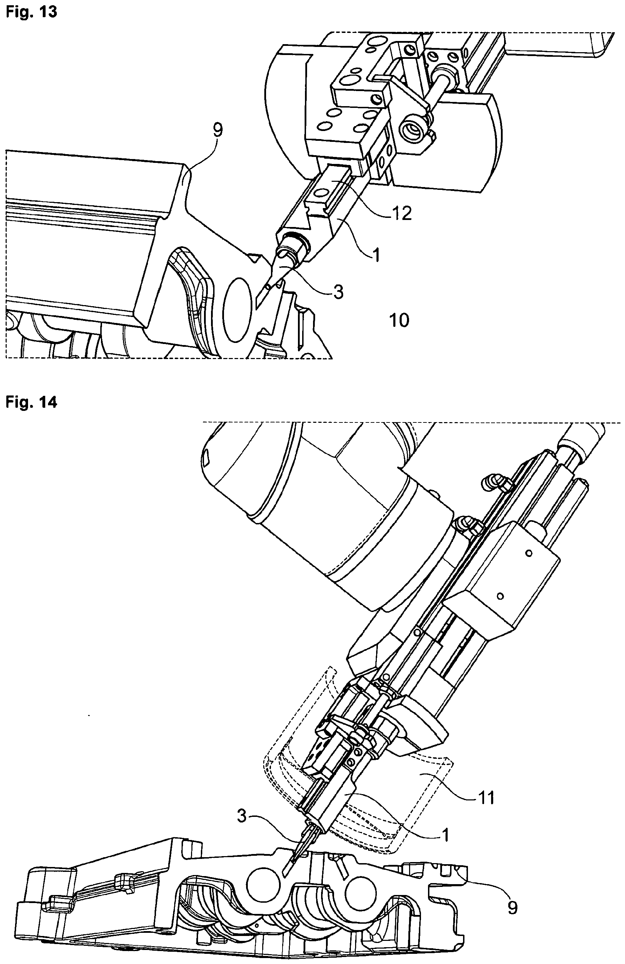

Die Anbindung einer Düse 3, beispielsweise einer Dosiernadel oder einer anderen Auslassvorrichtung, erfolgt über eine Zuleitung 2, die bei Kollision mit einem Körperteil eines Menschen oder einem anderweitigen Hindernis, zum Beispiel einem Bauteil 9, horizontal weggedrückt bzw. vertikal umgeknickt wird. Durch eine erfindungsgemäße Ausgestaltung des Werkzeuges für einen Roboter wirkt die Anbindung der Düse 3 daher wie ein sphärisches Lager. Durch die sphärische Lagerung ist die Düse 3 (Schmierspitze) nachgiebig, rückstellfähig, und/oder flexibel. Dadurch, dass die Lagerung beim Verfahren der Düse 3 (Schmierspitze) flexibel ist, kann die Düse 3 (Schmierspitze) Kollisionen ausweichen bzw. nachgeben. Die Lagerung wird erfindungsgemäß erst mittels der Hülle 1 versteift, wenn das Befetten stattfindet bzw. kurz bevor das Befetten stattfindet. Somit kann das auszubringende Medium 5 (z.B. Fett) die Zuleitung 2 (Schlauch) durch den Pressdruck nicht dehnen. Beispielhaft ist in Fig. 13 ein Verschiebemechanismus 12 für die Hülse 1 dargestellt.

Ein zusätzlicher Vorteil einer solchen sphärischen Lagerung ist, dass eine Anpassungsfähigkeit des erfindungsgemäßen Werkzeuges entsteht, um Bauteiltoleranzen oder Positionstoleranzen ausgleichen zu können. Bei hochviskosen Medien 5, zum Beispiel dickflüssigen Medien, wie Fett, wird an der möglichen Knickstelle der flexiblen Zuleitung 2, hier ein Schlauch, ein starrer Außenmantel, hier beispielsweise eine Hülse 1 (Schutzhülse), über den Schlauch geschoben, der das Aufweiten des Schlauches bei einer Kompression des Mediums 5 verhindert und gleichzeitig die Düse 3 (Dosiernadel) ausrichtet und stabilisiert. Somit ist es möglich die Düse 3 (Dosiernadel) mit einer bestimmten Kraft an das Bauteil 9 anzudrücken, um das Herausquellen des Mediums 5 zu verhindern. Das beim Verschieben der Hülse 1 freiwerdende Schlauchstück wird über ein im Inneren der flexiblen Zuleitung 2 angeordnetes starres Bauteil, z. B. ein Rohrstück (Rohr 8), vor erhöhtem Innendruck und somit vor einem Aufweiten geschützt. Bei niedrigviskosen Medien 5, zum Beispiel dünnflüssigen Medien wie Öl, kann an der möglichen Knickstelle der flexiblen Zuleitung 2, hier ein Schlauch, ein starrer Außenmantel, hier beispielsweise eine Hülse 1, über den Schlauch geschoben werden, der das Aufweiten des Schlauches bei einer möglichen Kompression des Mediums 5 verhindern würde und gleichzeitig die Düse 3 (Dosiernadel) ausrichten und stabilisieren würde. Bei niedrigviskosen Medien 5 muss ein solcher starrer Außenmantel und/oder ein Rohr 8 jedoch nicht vorhanden sein, wodurch bei der Herstellung Kosten gespart werden können. Hier ist die Eigenstabilität der flexiblen Zuleitung 2 im Regelfall ausreichend, um eine Aufweitung der flexiblen Zuleitung 2 zu verhindern, da eine Kompression des Mediums 5 nicht oder nur in einem sehr geringen Maß auftritt.

Bei hochviskosen Medien 5 kann die Fließfähigkeit durch Erhöhen der Temperatur verbessert werden. Deshalb ist es auch möglich den starren Außenmantel zumindest teilweise zu beheizen, beispielsweise durch eine Ausführung als Doppelmantel oder eine integrierte Heizspirale. Hier sind aber auch alle anderen denkbaren Heizmöglichkeiten vorstellbar. Des Weiteren ist auch denkbar, dass das Medium 5 beheizbar ist oder auch zumindest teilweise die flexible Zuleitung 2.

Darüber hinaus ist es denkbar, dass die flexible Zuleitung 2 aus einem intelligenten Werkstoff besteht und beispielsweise bei einem Anlegen einer Spannung starr wird, so dass eine verschiebbare Hülse 1 bzw. ein starrer Außenmantel zur Stabilisierung der flexiblen Zuleitung 2 vor erhöhten Innendrücken nicht mehr zusätzlich notwendig ist.

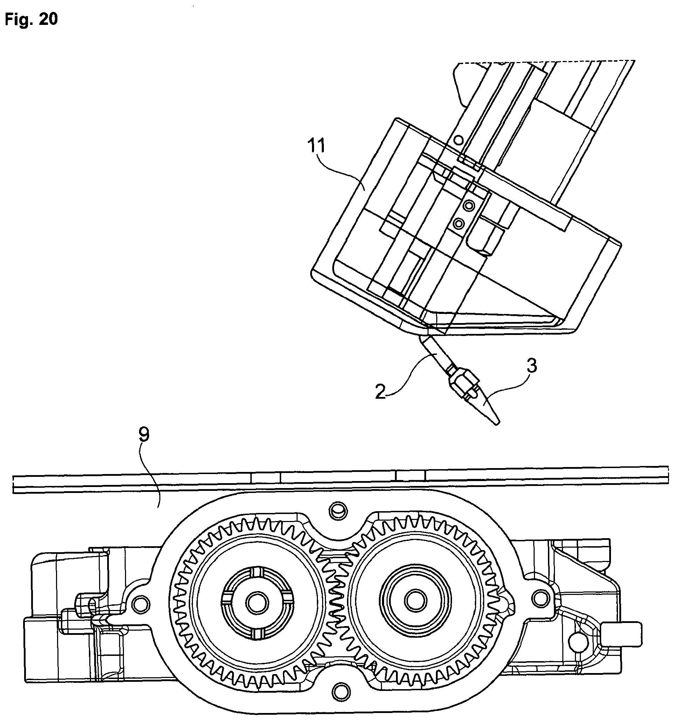

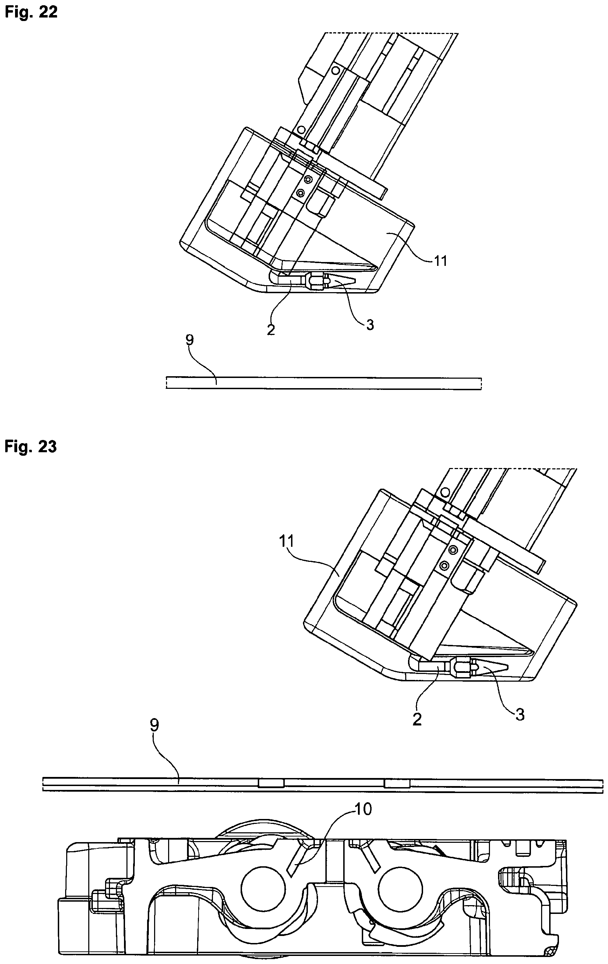

Damit es zu keinen Verletzungen von Personen kommen kann, befinden sich die flexible Zuleitung 2 und die Düse 3 (Dosiernadel) in einer Abschirmung 11, beispielsweise einer weiteren Schutzhülse oder ähnlichem. Wie in den Fign. 20 bis 25 gezeigt, wird zur Reduktion des bei kollaborierenden Betrieb auftretenden Gefahrenpotenzials bei einem Kontakt des erfindungsgemäßen Werkzeuges mit einem Körper, insbesondere einem menschlichen Körperteil, die sphärisch gelagerte Düse 3 des erfindungsgemäßen Werkzeuges im Bereich der flexiblen Zuleitung 2 so abgewinkelt bzw. abgeknickt, dass diese, wie z.B. in Fig. 22 dargestellt, sich in bzw. hinter einer Abschirmung 11 befindet. Durch die große Oberfläche dieser Abschirmung 11 können die Normwerte für kollaborierende Roboter eingehalten werden. Bevorzugt stoppt der Roboter bei einer ungewollten Berührung aufgrund seiner Kraftüberwachung und/oder Sensorik.

Die Prozessüberwachung bezüglich der Position der Düse 3 oder einer damit vergleichbaren Nadelposition bzw. das Vorhandensein einer Nadel wird unter Zuhilfenahme einer zusätzlichen Sensorik durchgeführt. Hierbei wird unter anderem auch die exakte Position der Düse 3 bzw. einer Nadelspitze detektiert um diese mit einem Handlingssystem oder Roboter (TCP-Versatz) korrigieren zu können.

Die Prozessüberwachung bezüglich des Mediums 5 findet über eine Drucksensorik statt, die beispielsweise am Dosierventil angeordnet ist.

Durch eine vorgenannte Konstruktion des erfindungsgemäßen Werkzeuges entsteht eine sogenannte inhärente Konstruktion.

Der Arbeitsablauf mit dem erfindungsgemäßen Werkzeug stellt sich wie folgt dar: Das zu befettende Werkteil (Bauteil 9) wird auf eine beliebige Weise, zum Beispiel über eine Fördereinrichtung, zu seinem Bearbeitungsplatz gebracht und dort indexiert ausgehoben, d.h. das Werkteil nimmt eine exakte Position am Bearbeitungsplatz ein. Nun fährt das am Roboter angeordnete Werkzeug zum Befetten zu einer ersten Bohrung 10 (Schmierbohrung), d.h. zu einer ersten Dosierposition. Diese Dosierposition wird vorzugsweise vorab im Steuerungssystem des Roboters programmiert, so dass hier vom Roboter mit seinem Werkzeug sehr exakt gearbeitet werden muss, wobei, wie oben erwähnt, geringe Bauteil- oder Positionstoleranzen durch das erfindungsgemäße Werkzeug ausgeglichen werden können. Des Weiteren ist aber auch denkbar, dass der Roboterarm ein Bildverarbeitungssystem, beispielsweise eine Kamera, aufweist, die die Positionsdaten des zu befettenden Bauteils 9 erkennt und diese mit den Positionsdaten der Düse 3 verrechnet, so dass die exakte Dosierposition ermittelt und anschließend angesteuert werden kann. Sobald die Düse 3 in einer Eintrittsebene der Bohrung 10 (Schmierbohrung) angekommen ist, wird ein starrer Außenmantel, beispielsweise eine Hülse 1, nach vorne, d.h. in Richtung Düse 3, geschoben, so dass die Schutzhülse zum Beispiel mittels eines Zentrierkonus 4 in die z.B. in Fig. 2 oder Fig. 4 gezeigte Position gelangt. Hierbei wird zum einen die Position der Düse 3 stabilisiert und zum anderen wird verhindert, dass die flexible Zuleitung 2, z.B. ein Schlauch oder eine flexible Rohrverbindung, durch den beim Auspressen des Mediums 5 erhöhten Innendruck aufgeweitet wird. Eine solche Aufweitung hätte zur Folge, dass die Dosierung des Mediums 5, beispielsweise ein Schmiermedium, nicht exakt erfolgen kann. Ist die Dosierung erfolgt, wird der starre Außenmantel wieder z.B. aus der in Fig. 4 dargestellte Position in die in Fig. 3 dargestellte Position gebracht, damit beim Wechsel zu einer weiteren Dosierposition die Düse 3 des erfindungsgemäßen Werkzeuges sphärisch gelagert ist und einer Person bei Kontakt kein Schaden zugefügt werden kann. Im Anschluss daran wird die nächste Dosierposition, wie zuvor beschrieben, angefahren und das Verfahren zum Befetten einer Schmierbohrung beginnt erneut.

Sofort nach jedem Einzelnen oder nach einer beliebigen Anzahl von Bauteilen 9 fährt der Roboter zu einer Kalibrierposition, zum Beispiel einem Laservorhang, um dort mit einer zusätzlichen Sensorik die exakte Position der Düse 3, zum Beispiel eine Nadelspitze, am erfindungsgemäßen Werkzeug für einen Roboter zu detektieren. Die Korrekturdaten werden ermittelt und mit der Roboterposition verrechnet und so die Düse 3 neu kalibriert. Ist die Position der Düse 3 (Nadelspitze) in Ordnung wird das Werkteil automatisch freigegeben oder muss nach Überprüfung durch den Mitarbeiter von Hand entnommen oder freigegeben werden. Nach der Freigabe verlässt das Bauteil 9 die Bearbeitungsposition. Jetzt wird der gesamte Vorgang wiederholt.

So ist eine exakte feste Dosierung der Schmiermittelmenge möglich. Zusätzlich bietet ein erfindungsgemäßes Werkzeug eine hohe Autonomie durch einen großen Vorratsbehälter. Es sind wenige Ersatz- und Verschleißteile notwendig, bei einem trotzdem sehr robusten und leichtem (z.B. 800 g) Aufbau des Dosierkopfes. Die Düse 3 kann beispielsweise durch feine Dosiernadeln mit einem Außendurchmesser von weniger als 2 mm gebildet werden. Darüber hinaus sind die erfindungsgemäße Vorrichtung und das erfindungsgemäße Verfahren sehr energieeffizient (Think Blue Factory; Pₘₐₓ = 200 W) und ermöglichen eine kontinuierliche Prozessbeobachtung und -überwachung durch den Mitarbeiter. Ein weiterer Vorteil liegt in der Steigerung der Prozessqualität und in der verbesserten Arbeitsergonomie bei gleichzeitig niedriger Komplexität, niedrigen Investitionskosten und einer hohen Flexibilität im Vergleich zur Vollautomatisierung. Die Bedienung einer erfindungsgemäßen Vorrichtung ist zudem ohne Spezialwissen möglich.

### Bezugszahlenliste

- 1: Hülse
- 2: flexible Zuleitung, Schlauch
- 3: Düse
- 4: Zentrierkonus
- 5: Medium
- 6: Ausnehmung
- 7: Anschlusseinheit
- 8: Rohr
- 9: Bauteil
- 10: Bohrung
- 11: Abschirmung
- 12: Verschiebemechanismus

## Patentansprüche

1. Werkzeug für einen Roboter zur Ausbringung eines viskosen Mediums (5),
- mit einer Befestigungsvorrichtung zur Anbringung des Werkzeuges an dem Roboter,
- mit einer Zuleitung (2) für das viskose Medium (5)
- mit einem am Ende der Zuleitung (2) angeordnetem Leitungsende, und
- mit mindestens einer nachgiebigen Lagerung, durch die das Leitungsende an dem Roboter nachgiebig gelagert ist,
**dadurch gekennzeichnet, dass** die
mindestens eine nachgiebige Lagerung durch eine Stabilisierungsvorrichtung blockierbar ist.

2. Werkzeug, nach Anspruch 1, wobei die Stabilisierungsvorrichtung zumindest teilweise um zumindest einen Teil der Zuleitung (2) angeordnet ist und/oder die Stabilisierungsvorrichtung zumindest teilweise in zumindest einen Teil der Zuleitung (2) integriert ist und/oder die Stabilisierungsvorrichtung zumindest einen Teil der Zuleitung (2) ist.

3. Werkzeug, nach Anspruch 1 oder Anspruch 2, wobei die Stabilisierungsvorrichtung eine Hülse (1) ist oder die Stabilisierungsvorrichtung durch die Zuleitung (2) gebildet wird, die zumindest teilweise aus einem intelligenten Werkstoff besteht.

4. Werkzeug, nach Anspruch 3, wobei die Hülse (2) verschieblich um die Zuleitung (2) angeordnet ist.

5. Werkzeug, nach einem der vorigen Ansprüche, wobei mindestens eine Lagerung an der Befestigungsvorrichtung und/oder der Zuleitung (2) angeordnet ist.

6. Werkzeug, nach einem der vorigen Ansprüche, wobei das Leitungsende eine Düse (3), eine Dosiernadel oder eine Schmierspitze ist.

7. Werkzeug, nach einem der vorigen Ansprüche, wobei das Leitungsende verschließbar ist.

8. Werkzeug, nach einem der vorigen Ansprüche, wobei die Lagerung rückstellfähig und/oder flexibel ist.

9. Werkzeug, nach einem der vorigen Ansprüche, wobei die Lagerung eine sphärische Lagerung ist.

10. Werkzeug, nach einem der vorhergehenden Ansprüche, wobei das Werkzeug eine Heizvorrichtung aufweist.

11. Werkzeug, nach einem der vorhergehenden Ansprüche, wobei das Werkzeug eine Sensorik aufweist.

12. Roboter zur Ausbringung eines viskosen Mediums, mit einem Werkzeug gemäß einem der vorigen Ansprüche, das mittels seiner Befestigungsvorrichtung an dem Roboter angeordnet ist.

13. Verfahren zur Ausbringung eines viskosen Mediums (5) mittels eines Roboters gemäß Anspruch 12, wobei spätestens zu Beginn der Ausbringung des viskosen Mediums eine nachgiebige Lagerung des Werkzeugs mittels einer Stabilisierungsvorrichtung des Werkzeugs blockiert wird.

14. Verfahren, nach Anspruch 13, wobei die Stabilisierungsvorrichtung ein Abknicken der Zuleitung (2) und/oder eine Ausdehnung der Zuleitung (2) bei der Ausbringung des viskosen Mediums (5) verhindert.

## Claims

1. Tool for a robot for applying a viscous medium (5),
- with a fastening device for attaching the tool to the robot,
- with a supply line (2) for the viscous medium (5)
- With a line end arranged at the end of the supply line (2) and
- with at least one flexible bearing through which the end of the line is flexibly mounted on the robot,
**characterized in that** the at least one flexible bearing can be blocked by a stabilizing device.

2. Tool according to claim 1, wherein the stabilization device is arranged at least partially around at least part of the feed line (2) and / or the stabilization device is at least partially integrated in at least part of the feed line (2) and / or the stabilization device is at least partially integrated the supply line (2) is.

3. Tool according to claim 1 or claim 2, wherein the stabilization device is a sleeve (1) or the stabilization device is formed by the supply line (2), which consists at least partially of an intelligent material.

4. Tool according to claim 3, wherein the sleeve (2) is arranged displaceably around the supply line (2).

5. Tool according to one of the preceding claims, wherein at least one bearing is arranged on the fastening device and / or the supply line (2).

6. Tool according to one of the preceding claims, wherein the end of the line is a nozzle (3), a dispensing needle or a lubricating tip.

7. Tool according to one of the preceding claims, wherein the end of the line can be closed.

8. Tool according to one of the preceding claims, wherein the storage is resilient and / or flexible.

9. Tool according to one of the preceding claims, wherein the storage is a spherical storage.

10. Tool according to one of the preceding claims, wherein the tool has a heating device.

11. Tool according to one of the preceding claims, wherein the tool has a sensor system.

12. Robot for applying a viscous medium, with a tool according to one of the preceding claims, which is arranged by means of its fastening device on the robot.

13. A method for applying a viscous medium (5) by means of a robot according to claim 12, wherein at the latest at the beginning of the application of the viscous medium, a flexible mounting of the tool is blocked by means of a stabilizing device of the tool.

14. The method according to claim 13, wherein the stabilization device prevents kinking of the supply line (2) and / or an expansion of the supply line (2) during the application of the viscous medium (5)

## Revendications

1. Outil pour robot d'application d'un milieu visqueux (5),
- avec un dispositif de fixation pour fixer l'outil au robot,
- avec une conduite d'alimentation (2) pour le fluide visqueux (5)
- Avec une extrémité de ligne disposée à l'extrémité de la ligne d'alimentation (2) et
- avec au moins un palier flexible à travers lequel l'extrémité de la ligne est montée de manière flexible sur le robot,
**caractérisé en ce que** l'au moins un palier flexible peut être bloqué par un dispositif de stabilisation.

2. Outil selon la revendication 1, dans lequel le dispositif de stabilisation est disposé au moins partiellement autour d'au moins une partie de la ligne d'alimentation (2) et / ou le dispositif de stabilisation est au moins partiellement intégré dans au moins une partie de la ligne d'alimentation (2). et / ou le dispositif de stabilisation est au moins partiellement intégré à la ligne d'alimentation (2).

3. Outil selon la revendication 1 ou la revendication 2, dans lequel le dispositif de stabilisation est un manchon (1) ou le dispositif de stabilisation est formé par la ligne d'alimentation (2), qui est au moins partiellement constituée d'un matériau intelligent.

4. Outil selon la revendication 3, dans lequel le manchon (2) est disposé de manière déplaçable autour de la ligne d'alimentation (2).

5. Outil selon l'une des revendications précédentes, dans lequel au moins un palier est disposé sur le dispositif de fixation et / ou la ligne d'alimentation (2).

6. Outil selon l'une des revendications précédentes, dans lequel l'extrémité de la ligne est une buse (3), une aiguille de distribution ou une pointe de lubrification.

7. Outil selon l'une des revendications précédentes, dans lequel l'extrémité de la ligne peut être fermée.

8. Outil selon l'une des revendications précédentes, dans lequel le stockage est élastique et / ou flexible.

9. Outil selon l'une des revendications précédentes, dans lequel le stockage est un stockage sphérique.

10. Outil selon l'une des revendications précédentes, dans lequel l'outil comporte un dispositif de chauffage.

11. Outil selon l'une des revendications précédentes, dans lequel l'outil comporte un système de capteur.

12. Robot d'application d'un milieu visqueux, avec un outil selon l'une des revendications précédentes, qui est agencé au moyen de son dispositif de fixation sur le robot.

13. Procédé d'application d'un milieu visqueux (5) au moyen d'un robot selon la revendication 12, dans lequel au plus tard au début de l'application du milieu visqueux, un montage flexible de l'outil est bloqué au moyen d'un stabilisateur. dispositif de l'outil.

14. Procédé selon la revendication 13, dans lequel le dispositif de stabilisation empêche le vrillage de la ligne d'alimentation (2) et / ou une expansion de la ligne d'alimentation (2) lors de l'application du milieu visqueux (5).
